# EUROPEAN PATENT APPLICATION

(11) **EP 4 684 873 A1**
(43) Date of publication of application: **28.01.2026**
(21) Application number: 23928810.3
(22) Date of filing: 26.12.2023
(51) Int. Cl.: B01J 19/28

(54) **CONTINUOUS REACTION DEVICE**

(30) Priority: 23.03.2023 JP 2023047339
(71) Applicant: National Institute of Advanced Industrial Science and Technology, Chiyoda-ku Tokyo 100-8921 (JP); Ifactory Inc., Tokyo 146-0093 (JP); Powrex Corporation, Itami-shi Hyogo 664-0837 (JP); Mak Engineering Corporation, Kurashiki-shi, Okayama 713-8103 (JP)
(72) Inventor: YADA, Akira, Tsukuba-shi, Ibaraki 305-8560 (JP); SATO, Kazuhiko, Tsukuba-shi, Ibaraki 305-8560 (JP); SAITO, Takao, Tokyo 146-0093 (JP); HASEGAWA, Koji, Itamicity, Hyogo 6640837 (JP); KOTANI, Isao, Kurashiki-shi, Okayama 713-8103 (JP); KOTANI, Kentaro, Kurashiki-shi, Okayama 713-8103 (JP)
(74) Representative: Mathys & Squire
(86) International application number: PCT/JP2023/046562
(87) International publication number: WO 2024/195244

(57) **Abstract**

Provided is a continuous reactor capable of performing precise chemical reactions with a simple configuration. A continuous reactor includes an upstream-side unit (10a), a downstream-side unit (10b) connected to the upstream-side unit, and a rotation driving unit configured to rotate the upstream-side unit and the downstream-side unit about a common rotary shaft, in which a target substance to be subjected to a reaction supplied to the upstream-side unit is stirred in the upstream-side unit and subsequently transferred to the downstream-side unit, and the rotation driving unit causes the upstream-side unit to perform oscillating rotation about the rotary shaft in such a way that the target substance is stirred in the upstream-side unit, and causes the upstream-side unit to perform circumferential rotation about the rotary shaft in such a way that the target substance is transferred from the upstream-side unit to the downstream-side unit.

## Description

### [Technical Field]

The present invention relates to a continuous reactor.

### [Background Art]

A continuous reactor continuously causes a target substance, such as a liquid or a solid (e.g., a pharmaceutical raw material), to undergo a chemical reaction and produces a product (e.g., a pharmaceutical).

The continuous reactor includes a plurality of reaction vessels corresponding to respective production stages. The continuous reactor causes the target substance to undergo a chemical reaction in each of the reaction vessels. The target substance is transferred via piping from the upstream reaction vessel to the downstream reaction vessel. The continuous reactor that increases production efficiency of a product to be produced from the target substance has been proposed (for example, PTL 1).

PTL 1 discloses a continuous reactor in which a plurality of compartments is formed. A weir plate having a weir function is disposed between adjacent compartments. A target substance that has undergone a chemical reaction in the upstream compartment continues to be supplied within the same compartment and overflows. As a result, the target substance is transferred over the weir plate to the downstream compartment. The continuous reactor generally has a characteristic of requiring a longer reaction time. Thus, each of the compartments includes an agitation blade. The target substance is stirred by the agitation blade in each compartment. As a result, the chemical reaction in each compartment is accelerated.

The target substance, which is the subject of the chemical reaction, overflows within the compartment and is thus transferred over the weir plate to the downstream compartment. Thus, the target substance may be transferred to the downstream compartment by overflowing, even when the chemical reaction has not been completed. As a result, the continuous reactor is not suitable for producing products that require precise chemical reactions.

### [Citation List]

### [Patent Literature]

[PTL 1] JP H4-227052 A

### [Summary of Invention]

### [Technical Problem]

The present invention provides a continuous reactor capable of performing precise chemical reactions with a simple configuration.

### [Solution to Problem]

A continuous reactor according to the present invention includes: an upstream-side unit; a downstream-side unit connected to the upstream-side unit; and a rotation driving unit configured to rotate the upstream-side unit and the downstream-side unit about a common rotary shaft, in which a target substance to be subjected to a reaction supplied to the upstream-side unit is stirred in the upstream-side unit and subsequently transferred to the downstream-side unit, and the rotation driving unit causes the upstream-side unit to perform oscillating rotation about the rotary shaft in such a way that the target substance is stirred within the upstream-side unit, and causes the upstream-side unit to perform circumferential rotation about the rotary shaft in such a way that the target substance is transferred from the upstream-side unit to the downstream-side unit.

### [Advantageous Effects of Invention]

The present invention is capable of providing the continuous reactor that is capable of performing precise chemical reactions with a simple configuration.

### [Brief Description of Drawings]

[Fig. 1] Fig. 1 is a perspective view of a continuous reactor illustrating an embodiment of the continuous reactor according to the present invention.
[Fig. 2] Fig. 2 is a front view of the continuous reactor.
[Fig. 3] Fig. 3 is a longitudinal sectional view of the continuous reactor.
[Fig. 4] Fig. 4 is a longitudinal sectional perspective view of the continuous reactor.
[Fig. 5] Fig. 5 is a perspective view of a unit of the continuous reactor.
[Fig. 6] Fig. 6 is a sectional perspective view of the unit illustrating a positional relationship between a transfer wall and a communication hole in the unit.
[Fig. 7] Fig. 7 is a schematic diagram illustrating oscillating rotation of the unit.
[Fig. 8] Fig. 8 is a schematic diagram illustrating the transfer of a target substance between the units caused by circumferential rotation of the units.
[Fig. 9] Fig. 9 is a schematic diagram illustrating a continuation of the transfer in Fig. 8.
[Fig. 10] Fig. 10 is a longitudinal sectional view of the continuous reactor illustrating another embodiment of the continuous reactor according to the present invention.

### [Description of Embodiments]

An embodiment of a continuous reactor according to the present invention (hereinafter referred to as a "present reactor") will be described below with reference to the drawings.

In the following description and drawings, unless otherwise specified, the present reactor is installed with the rotary shaft oriented horizontally. In the present reactor, the upstream side is upstream in a direction in which a target substance is transferred. In the present reactor, the downstream side is downstream in a direction in which the target substance is transferred.

### Embodiment (1) of Present Reactor

### Configuration of Present Reactor (1)

The configuration of the present reactor will be described below.

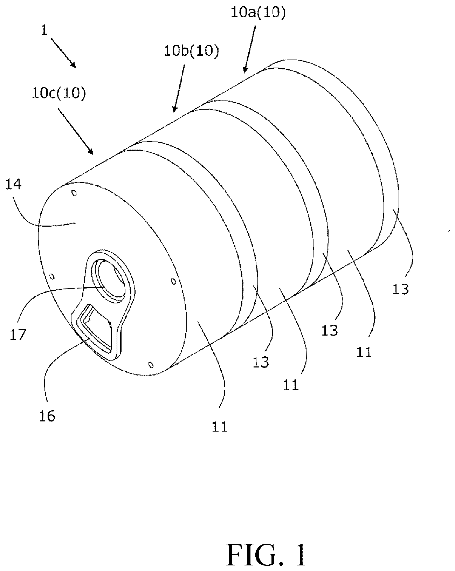

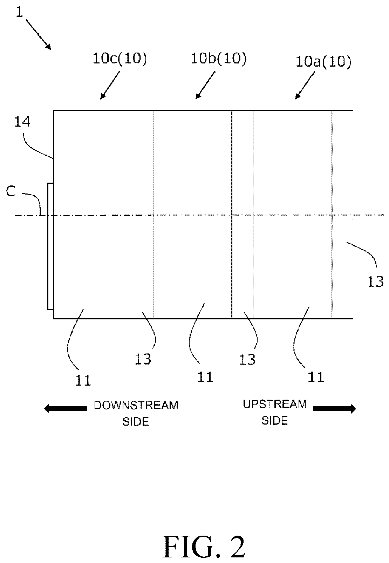

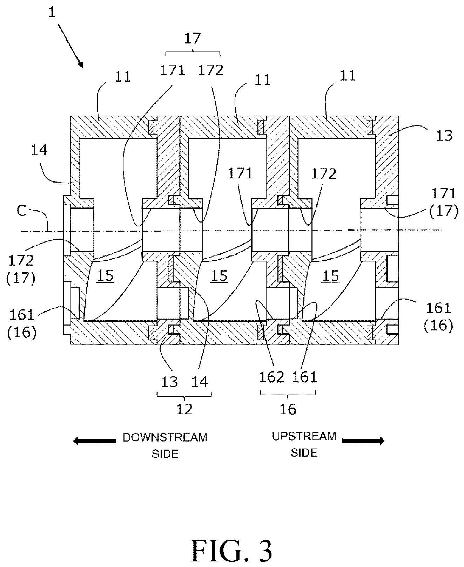

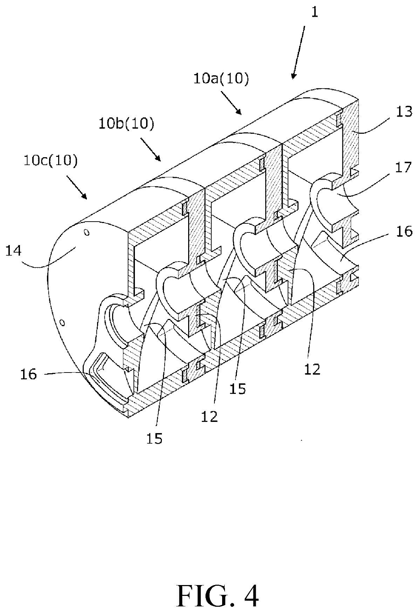

Fig. 1 is a perspective view illustrating the embodiment of the present reactor. Fig. 2 is a front view of the present reactor. Fig. 3 is a perspective view of the present reactor. Fig. 4 is a longitudinal sectional perspective view of the present reactor.

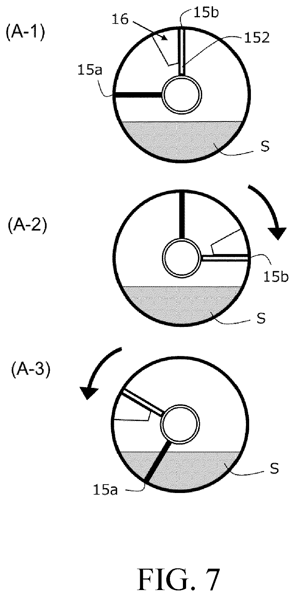

The present reactor 1 continuously causes a target substance S, such as a liquid or a solid (e.g., a pharmaceutical raw material, see Fig. 7), to undergo a chemical reaction and produces a product (e.g., a pharmaceutical). The present reactor 1 includes a plurality of units 10 connected to one another. The plurality of units 10 has spaces in which chemical reactions corresponding to production stages of the target substance S are performed. The present reactor 1 has a tubular shape. The present reactor 1 performs oscillating rotation and circumferential rotation of the plurality of units 10 by a rotation driving unit (not illustrated).

The "target substance S" is a substance that is put (introduced) into the present reactor 1 as a raw material. The target substance S is a liquid or a solid. The target substance S becomes the desired product through chemical reactions corresponding to production stages.

The "rotation driving unit" rotates and drives the present reactor 1 about a rotary shaft C. The rotation driving unit controls oscillating rotation and circumferential rotation in the present reactor 1. The rotation driving unit includes a driving device (not illustrated) and a driving control unit (not illustrated). The driving device is a device serving as a driving source that rotates the present reactor 1. The driving device is, for example, a motor, an engine, or the like. The driving control unit controls the oscillating rotation or the circumferential rotation of the present reactor 1. The driving control unit is implemented by an information processing device such as a computer. The driving control unit executes a control program of the present reactor 1. The control program that operates the present reactor 1 works in cooperation with hardware resources included in the information processing device to perform the oscillating or circumferential rotation of the present reactor 1.

The "rotary shaft C" is a central axis of the oscillating rotation or the circumferential rotation of the present reactor 1.

The present reactor 1 is composed of three identical units 10 connected in the coaxial direction. That is, the present reactor 1 includes, in order from the upstream side to the downstream side, a first unit 10a, a second unit 10b, and a third unit 10c. A configuration in which two units 10 are connected constitutes the minimum unit of the present reactor 1. The unit 10 located on the upstream side is an example of the upstream-side unit in the present invention. The unit 10 located on the downstream side with respect to the upstream-side unit is an example of the downstream-side unit in the present invention.

The unit 10 has a space in which a chemical reaction of the target substance S is performed. The unit 10 has a cylindrical shape. The unit 10 performs the oscillating rotation and the circumferential rotation of the unit 10 by the rotation driving unit. When the unit 10 performs the oscillating rotation, the target substance S in the unit 10 is stirred. When the unit 10 performs the circumferential rotation in a predetermined direction, the target substance S that has undergone a chemical reaction in the unit 10 on the upstream side is transferred to the unit 10 on the downstream side. The present reactor 1 performs stirring and transfer of the target substance S by the oscillating rotation and the circumferential rotation. Details of the oscillating rotation and the circumferential rotation of the present reactor 1 will be described later.

The unit 10 includes an outer peripheral wall 11, a partition wall 12, a transfer wall 15, a communication hole 16, and a shaft hole 17.

The outer peripheral wall 11 constitutes a housing of the unit 10 together with the partition wall 12. The outer peripheral wall 11 has a cylindrical shape.

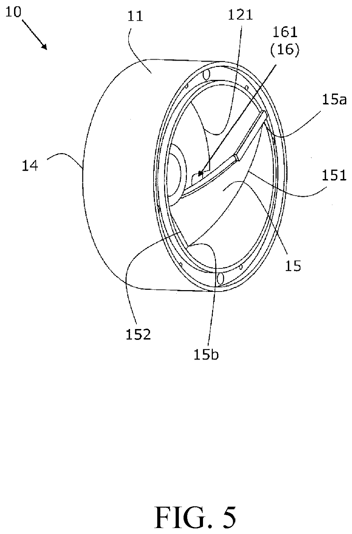

The partition wall 12 partitions the inside of the unit 10 on the upstream side from the inside of the unit 10 on the downstream side. The partition wall 12 includes an upstream-side partition wall 13 and a downstream-side partition wall 14. The partition wall 12 includes an outer edge portion 121 (see Fig. 5). The outer edge portion 121 is a region of an outer edge of the partition wall 12 inside the outer peripheral wall 11. That is, the outer edge portion 121 is a region in the vicinity of the partition wall 12 where the outer peripheral wall 11 and the partition wall 12 are orthogonal to each other.

The upstream-side partition wall 13 constitutes the housing of the unit 10 together with the outer peripheral wall 11 and the downstream-side partition wall 14. The upstream-side partition wall 13 has a circular shape. The upstream-side partition wall 13 is attached to an edge of the outer peripheral wall 11 via a seal.

The downstream-side partition wall 14 constitutes the housing of the unit 10 together with the outer peripheral wall 11 and the upstream-side partition wall 13. The downstream-side partition wall 14 has a circular shape. The downstream-side partition wall 14 is integrally formed with the outer peripheral wall 11.

Fig. 5 is a perspective view of the unit 10 of the present reactor 1. In the following description, Figs. 3 and 4 are referred to as appropriate. The figure illustrates the inside of the unit 10 from which the upstream-side partition wall 13 is removed.

The transfer wall 15 guides the target substance S stirred in the unit 10 to the communication hole 16. In other words, the transfer wall 15 captures the target substance S in the unit 10 on the upstream side, and transfers the target substance S to the inside of the unit 10 on the downstream side. The transfer wall 15 is disposed in a space surrounded by the outer peripheral wall 11. The transfer wall 15 is disposed in such a way as to divide an inner peripheral surface of the outer peripheral wall 11. The transfer wall 15 divides the space in the unit 10. The transfer wall 15 divides the space in the unit 10 in such a way that, when the unit 10 rotates in the circumferential direction, the target substance S in the unit 10 on the upstream side and the target substance S in the unit 10 on the downstream side are not mixed. That is, when the unit 10 on the upstream side performs the circumferential rotation, the transfer of the target substance S in the unit 10 on the upstream side is restricted by the transfer wall 15. The transfer wall 15 has a spiral shape formed by deforming a rectangular plate. The transfer wall 15 is disposed to be inclined with respect to the outer peripheral wall 11. The transfer wall 15 includes an inner peripheral abutment side 151 and a partition abutment side 152.

The inner peripheral abutment side 151 is a side of the transfer wall 15 that abuts the outer peripheral wall 11. The inner peripheral abutment side 151 includes an upstream end 15a and a downstream end 15b. The upstream end 15a is disposed at one of openings of the outer peripheral wall 11, i.e., the opening on the upstream side. That is, the upstream end 15a abuts the upstream-side partition wall 13. The downstream end 15b is disposed at the other opening of the outer peripheral wall 11, i.e., the opening on the downstream side. That is, the downstream end 15b abuts the downstream-side partition wall 14. The upstream end 15a and the downstream end 15b are disposed 90 degrees apart in the circumferential direction.

The partition abutment side 152 is a side of the transfer wall 15 that abuts the downstream-side partition wall 14. The partition abutment side 152 is a final end of the transfer wall 15 that captures the target substance S. The partition abutment side 152 is disposed so as to be orthogonal to the axial direction of the rotary shaft C. That is, the partition abutment side 152 is disposed so as to extend from the downstream end 15b toward the central portion of the downstream-side partition wall 14.

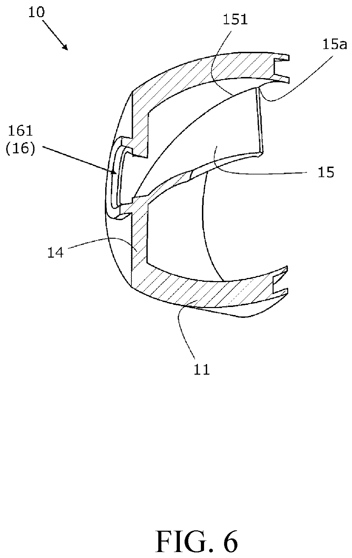

Fig. 6 is a sectional perspective view of the unit 10 illustrating a positional relationship between the transfer wall 15 and the communication hole 16 in the unit 10. In the following description, Figs. 3 to 5 are referred to as appropriate. The figure illustrates a state where a portion of each of the transfer wall 15 and the communication hole 16 is cut.

The communication hole 16 is a hole that allows the inside of the unit 10 on the upstream side to communicate with the inside of the unit 10 on the downstream side. That is, the communication hole 16 is a hole that transfers, to the inside of the unit 10 on the downstream side, the target substance S captured by the transfer wall 15 in the unit 10 on the upstream side. The communication hole 16 has a fan shape. The communication hole 16 is disposed in the outer edge portion 121 of the partition wall 12. The communication hole 16 is composed of a discharge port 161 and an inlet port 162.

The discharge port 161 is a hole disposed in the downstream-side partition wall 14. The discharge port 161 is disposed in a position facing the inlet port 162. The discharge port 161 is disposed between the upstream end 15a of the transfer wall 15 and the downstream end 15b of the transfer wall 15. The discharge port 161 is disposed along the outer peripheral wall 11, the downstream end 15b of the transfer wall 15, and the partition abutment side 152. That is, the discharge port 161 is disposed in the outer edge portion 121 of the partition wall 12 (i.e., the downstream-side partition wall 14). The discharge port 161 (i.e., the communication hole 16) is disposed in the vicinity of the downstream end 15b and the partition abutment side 152.

The inlet port 162 is a hole disposed in the upstream-side partition wall 13. The inlet port 162 is disposed in a position facing the discharge port 161. The inlet port 162 is disposed between the upstream end 15a of the transfer wall 15 and the downstream end 15b of the transfer wall 15. The inlet port 162 is disposed in a position facing the downstream end 15b of the transfer wall 15. The inlet port 162 is disposed in the outer edge portion 121 of the partition wall 12 (i.e., the upstream-side partition wall 13).

Referring back to Figs. 1 to 4, the shaft hole 17 is a hole formed in the rotary shaft C of the unit 10. That is, the shaft hole 17 is a hole disposed at the central portion of the partition wall 12. The shaft hole 17 is a hole through which a shaft member (not illustrated) passes, the shaft member being configured to cause the present reactor 1 to perform the oscillating rotation or the circumferential rotation. The shaft hole 17 includes an upstream-side shaft hole 171 and a downstream-side shaft hole 172.

The upstream-side shaft hole 171 is a hole disposed at the central portion of the upstream-side partition wall 13.

The downstream-side shaft hole 172 is a hole disposed at the central portion of the downstream-side partition wall 14.

The shaft member is a stick-shaped member. The shaft member is made of metal. The shaft member is fixed through the shaft hole 17. When the shaft member rotates, the present reactor 1 performs the oscillating rotation or the circumferential rotation in accordance with the rotation of the shaft member.

In the present embodiment, the rotation driving unit is assembled to the shaft member. The rotation driving unit controls the oscillating rotation and the circumferential rotation of the shaft member. That is, the rotation driving unit controls the oscillating rotation and the circumferential rotation of the present reactor 1 via the shaft member.

### Operation of Present Embodiment (1)

### Oscillating Rotational Motion

The oscillating rotation of the present reactor 1 will be described below. In the following description, Figs. 1 to 5 are referred to as appropriate.

The following description and drawings indicate a state where the present reactor 1 is viewed from the upstream side to the downstream side (i.e., in the side view) unless otherwise specified. In the present reactor 1, the term "lower" refers to the direction of gravity and the direction in which the target substance S is accumulated. In the present reactor 1, the term "upper" refers to the direction opposite to the lower direction. In the side view of the present reactor 1, the positive rotation is a clockwise direction (rightward). In the side view of the present reactor 1, the counter rotation is a counterclockwise direction (leftward).

Fig. 7 is a schematic diagram illustrating the oscillating rotation in the unit 10. The figure illustrates a diagram in which the downstream-side partition wall 14 is viewed from the upstream side. Fig. 7(A-1) illustrates the state of the unit 10 in the basic position of the oscillating rotation. Fig. 7(A-2) illustrates the state of the unit 10 after being rotated in the positive direction to a predetermined position. Fig. 7(A-3) illustrates the state of the unit 10 being rotated in the counter rotation to a predetermined position.

The oscillating rotation causes the present reactor 1 to perform a reciprocating rotational motion. The oscillating rotation causes the present reactor 1 to undergo repeated positive and counter rotation within a predetermined angular range about the rotary shaft C of the present reactor 1. The oscillating rotation is assumed to start from the basic position of the unit 10. For convenience of description, the rotational position of the unit 10 during the oscillating rotation is described based on analog clock positions (i.e., clock positions).

Fig. 7(A-1) illustrates the state of the unit 10 in the basic position. In the basic position, the partition abutment side 152 is at the 12 o'clock position. The communication hole 16 at the basic position is disposed in the upper portion of the unit 10. The target substance S at the basic position is disposed in the lower portion of the unit 10.

First, the rotation driving unit causes the unit 10 to perform positive rotation from the basic position. The unit 10 performs positive rotation to the predetermined position. The rotation speed at this time is appropriately determined based on the reaction rate of the target substance S and the like.

Fig. 7(A-2) illustrates the state of the unit 10 after being rotated in the positive direction to the predetermined position. In the predetermined position in positive rotation, the partition abutment side 152 is at the 3 o'clock position. The communication hole 16 at the predetermined position in positive rotation is disposed in the right portion of the unit 10. The target substance S at the predetermined position is disposed in the lower portion of the unit 10. The predetermined position in positive rotation is the maximum oscillating position within the rotation range for positive rotation. The unit 10 temporarily stops at the predetermined position in positive rotation. The target substance S is stirred in accordance with the positive rotation and temporary stop of the unit 10.

Then, the unit 10 is caused to perform counter rotation from the predetermined position in positive rotation. The unit 10 passes the basic position. The unit 10 performs counter rotation to the predetermined position. The rotation speed at this time is appropriately determined based on the reaction rate of the target substance S and the like.

Fig. 7(A-3) illustrates the state of the unit 10 being rotated in the counter rotation to a predetermined position. In the predetermined position in counter rotation, the partition abutment side 152 is at the 10 o'clock position. The communication hole 16 at the predetermined position in counter rotation is disposed in the left portion of the unit 10. The target substance S at the predetermined position is disposed in the lower portion of the unit 10. The predetermined position in counter rotation is the maximum oscillating position within the rotation range for counter rotation. The unit 10 temporarily stops at the predetermined position in counter rotation. The target substance S is stirred in accordance with the counter rotation and temporary stop of the unit 10.

Then, the rotation driving unit causes the unit 10 to perform positive rotation from the predetermined position in counter rotation. The unit 10 is returned to the basic position. One set of the oscillating rotational motions ends. One set of the oscillating rotational motions is repeated as necessary. That is, when the present reactor 1 performs the oscillating rotation, the target substance S in the present reactor 1 is stirred in accordance with the motion of the present reactor 1.

### Circumferential Rotational Motion

The circumferential rotation of the present reactor 1 will be described below. In the following description, Figs. 1 to 5 are referred to as appropriate. In the following description, the first unit 10a is an example of the upstream-side unit in the present invention. The second unit 10b is an example of the downstream-side unit in the present invention.

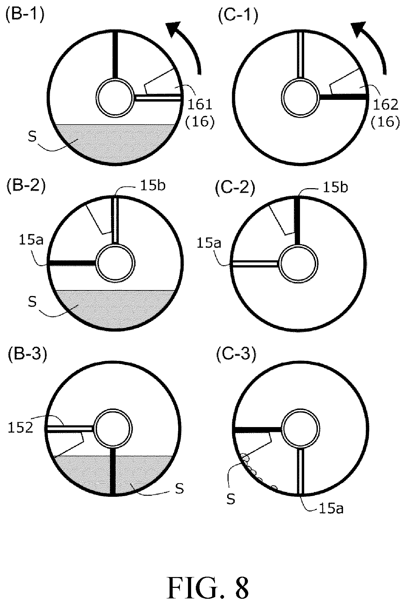

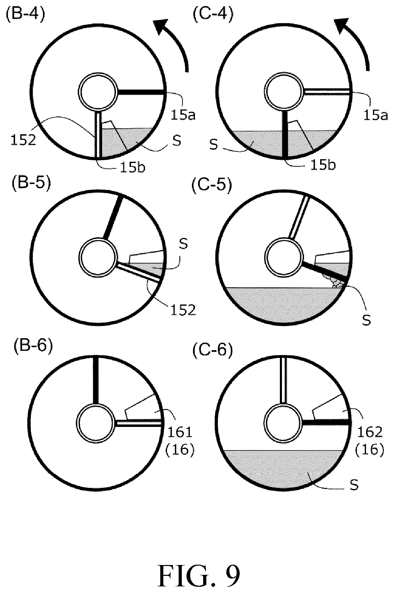

Figs. 8 and 9 are schematic diagrams illustrating the transfer of the target substance S between the units 10 caused by the circumferential rotation of the units 10. Figs. 8(B-1) to 8(B-3) and Figs. 9(B-4) to 9(B-6) illustrate diagrams when the inside of the first unit 10a is viewed from the upstream side. Fig. 8(B-1) illustrates the state of the unit 10 in the basic position of the circumferential rotation. Fig. 8(B-2) illustrates the state of the unit 10 after a quarter turn of counter rotation from the basic position. Fig. 8(B-3) illustrates the state of the unit 10 after a half turn of counter rotation from the basic position. Fig. 9(B-4) illustrates the state of the unit 10 after a three-quarter turn of counter rotation from the basic position. Fig. 9(B-5) illustrates the state of the unit 10 after an eleven-twelfths turn of counter rotation from the basic position. Fig. 9(B-6) illustrates the state of the unit 10 after returning to the basic position of circumferential rotation. Figs. 8(C-1) to 8(C-3) and Figs. 9(C-4) to 9(C-6) illustrate diagrams when the inside of the second unit 10b is viewed from the upstream side. Each of Figs. 8(C-1) to 8(C-3) and Figs. 9(C-4) to 9(C-6) corresponds to each of Figs. 8(B-1) to 8(B-3) and Figs. 9(B-4) to 9(B-6). The black rectangle in each circle in Figs. 8 and 9 illustrates the state where the end portion of the transfer wall 15 is disposed on the downstream-side partition wall 14.

The circumferential rotation causes the target substance S in the first unit 10a to be transferred to the inside of the second unit 10b. The circumferential rotation causes the present reactor 1 to perform one full counter rotation about the rotary shaft C. The circumferential rotation starts from the basic position of each of the first unit 10a and the second unit 10b. For convenience of description, the rotation position of each of the first unit 10a and the second unit 10b during the circumferential rotation is described based on analog clock positions (i.e., clock positions).

Fig. 8(B-1) illustrates the state of the first unit 10a in the basic position. In the basic position, the partition abutment side 152 is at the 3 o'clock position. The communication hole 16 at the basic position is disposed in the right portion of the unit 10. The target substance S at the basic position is disposed in the lower portion of the first unit 10a.

Fig. 8(C-1) illustrates the state of the second unit 10b in the basic position. In the basic position, the partition abutment side 152 is at the 3 o'clock position. The communication hole 16 at the basic position is disposed in the right portion of the unit 10. The target substance S at the basic position is not disposed in the second unit 10b.

First, the rotation driving unit simultaneously causes each of the first unit 10a and the second unit 10b to perform counter rotation from the basic position. The rotation driving unit causes each of the first unit 10a and the second unit 10b to perform a quarter turn of counter rotation from the basic position. The rotation speed at this time is appropriately determined depending on the reaction rate of the target substance S and the like.

Fig. 8(B-2) illustrates the state of the first unit 10a after a quarter turn of counter rotation from the basic position. At the position after a quarter turn of counter rotation from the basic position, the partition abutment side 152 is at the 12 o'clock position. The communication hole 16 at this position is disposed in the upper portion of the first unit 10a. The target substance S at this position is disposed in the lower portion of the first unit 10a.

Fig. 8(C-2) illustrates the state of the second unit 10b after a quarter turn of counter rotation from the basic position. At the position after a quarter turn of counter rotation from the basic position, the partition abutment side 152 is at the 12 o'clock position. The communication hole 16 at this position is disposed in the upper portion of the second unit 10b. The target substance S at this position is not disposed in the second unit 10b.

Then, the rotation driving unit simultaneously causes each of the first unit 10a and the second unit 10b to perform a quarter turn of counter rotation. That is, the rotation driving unit causes each of the first unit 10a and the second unit 10b to perform a half turn of counter rotation from the basic position.

Fig. 8(B-3) illustrates the state of the first unit 10a after a half turn of counter rotation from the basic position. At the position after a half turn of counter rotation from the basic position, the partition abutment side 152 is at the 9 o'clock position. The communication hole 16 at this position is disposed in the left portion of the first unit 10a and in the vicinity of the liquid surface of the target substance S. The target substance S at this position is disposed in the lower portion of the first unit 10a. The target substance S starts to be transferred to the second unit 10b through the communication hole 16.

Fig. 8(C-3) illustrates the state of the second unit 10b after a half turn of counter rotation from the basic position. At the position after a half turn of counter rotation from the basic position, the partition abutment side 152 is at the 9 o'clock position. The communication hole 16 at this position is disposed in the left portion of the second unit 10b and in the vicinity of the liquid surface of the target substance S. The target substance S at this position starts to be transferred to the second unit 10b via the communication hole 16. The target substance S is transferred only to the upstream end 15a of the second unit 10b. In other words, the inside of the second unit 10b is divided by the transfer wall 15 at the position of the upstream end 15a.

Then, the rotation driving unit simultaneously causes each of the first unit 10a and the second unit 10b to perform a quarter turn of counter rotation. That is, the rotation driving unit causes each of the first unit 10a and the second unit 10b to perform a three-quarter turn of counter rotation from the basic position.

Fig. 9(B-4) illustrates the state of the first unit 10a after a three-quarter turn of counter rotation from the basic position. At the position after a three-quarter turn of counter rotation from the basic position, the partition abutment side 152 is at the 6 o'clock position. The communication hole 16 at this position is disposed in the lower portion of the first unit 10a and in the target substance S. The target substance S at this position is disposed in the lower portion of the first unit 10a and in the right portion with respect to the partition abutment side 152. The target substance S at this position is captured by the transfer wall 15. That is, the target substance S is captured by the transfer wall 15 on the side, with the partition abutment side 152 serving as a boundary. The target substance S in the first unit 10a is discharged through the communication hole 16.

Fig. 9(C-4) illustrates the state of the second unit 10b after a three-quarter turn of counter rotation from the basic position. At the position after a three-quarter turn of counter rotation from the basic position, the partition abutment side 152 is at the 6 o'clock position. The communication hole 16 at this position is disposed in the lower portion of the second unit 10b and in the target substance S. The target substance S at this position is disposed in the lower portion of the second unit 10b. The target substance S in the second unit 10b is introduced through the communication hole 16.

Then, the rotation driving unit simultaneously causes each of the first unit 10a and the second unit 10b to perform a one-sixth turn of counter rotation. That is, the rotation driving unit causes each of the first unit 10a and the second unit 10b to perform an eleven-twelfths turn of counter rotation from the basic position.

Fig. 9(B-5) illustrates the state of the first unit 10a after an eleven-twelfths turn of counter rotation from the basic position. At the position after an eleven-twelfths turn of counter rotation from the basic position, the partition abutment side 152 is at the 4 o'clock position. The communication hole 16 in the position is disposed in the right portion of the first unit 10a. A part of the target substance S at this position is captured by the transfer wall 15. That is, a part of the target substance S is captured by the transfer wall 15 on one side, with the partition abutment side 152 serving as a boundary. The part of the target substance S at this position is disposed in the right portion of the first unit 10a and on the upper side with respect to the partition abutment side 152. The target substance S at this position is not disposed in the lower portion of the first unit 10a. The transfer wall 15 at this position is disposed in such a way that the upstream end 15a is located on the upper side and the downstream end 15b is located on the lower side. That is, the transfer wall 15 is inclined from the upper side to the lower side. As a result, the part of the target substance S captured by the transfer wall 15 is discharged to the second unit 10b through the communication hole 16.

Fig. 9(C-5) illustrates the state of the second unit 10b after an eleven-twelfths turn of counter rotation from the basic position. At the position after an eleven-twelfths turn of counter rotation from the basic position, the partition abutment side 152 is at the 4 o'clock position. The communication hole 16 at this position is disposed in the right portion of the second unit 10b and above the liquid surface of the target substance S. The target substance S at this position is disposed in the lower portion of the second unit 10b. The target substance S at this position is introduced through the communication hole 16.

Then, the rotation driving unit simultaneously causes each of the first unit 10a and the second unit 10b to perform a one-twelfth turn of counter rotation. The rotation driving unit causes each of the first unit 10a and the second unit 10b to perform counter rotation from the basic position and return to the basic position.

Fig. 9(B-6) illustrates the state of the first unit 10a after returning to the basic position. At the basic position, the partition abutment side 152 is at the 3 o'clock position. At the basic position, the communication hole 16 is disposed in the right portion of the unit 10. At this position, the target substance S is not disposed in the first unit 10a. The entire target substance S is discharged from the first unit 10a.

Fig. 9(B-6) illustrates the state of the second unit 10b after returning to the basic position. At the basic position, the partition abutment side 152 is at the 3 o'clock position. The communication hole 16 at the basic position is disposed in the right portion of the unit 10. The target substance S at this position is disposed in the lower portion of the second unit 10b. The entire target substance S is introduced to the second unit 10b.

Each of the first unit 10a and the second unit 10b rotates from the basic position to the basic position, and one set of circumferential rotational motions ends. That is, when the present reactor 1 performs the circumferential rotation, the target substance S in the present reactor 1 is transferred from the first unit 10a to the second unit 10b.

In the present reactor 1, the target substance S is stirred in the first unit 10a and then transferred to the second unit 10b. That is, the rotation driving unit causes the first unit 10a to perform oscillating rotation about the rotary shaft C in such a way that the target substance S is stirred in the first unit 10a. The chemical reaction of the target substance S is accelerated by stirring. The rotation driving unit causes the first unit 10a to perform the circumferential rotation about the rotary shaft C in such a way that the target substance S is transferred from the first unit 10a to the second unit 10b. The first unit 10a performs the circumferential rotation, thereby transferring the target substance S from the first unit 10a to the second unit 10b.

### Operation of Present Reactor (1)

The operation of the present reactor 1 will be described below. In the following description, Figs. 1 to 4 are referred to as appropriate.

The present reactor 1 includes the first unit 10a, the second unit 10b, and the third unit 10c. The first unit 10a, the second unit 10b, and the third unit 10c each enable a different chemical reaction to occur.

First, the target substance S is introduced into the first unit 10a on the upstream side together with other raw materials. The target substance S is input into the first unit 10a from the inlet port 162 of the first unit 10a or the upstream-side shaft hole 171. At this time, the inlet port 162 is located in the upper portion of the first unit 10a. An appropriate amount of the target substance S (e.g., approximately one fourth of the capacity of the unit 10) is introduced into the first unit 10a.

Then, the rotation driving unit causes the present reactor 1 to perform the oscillating rotation. The target substance S is stirred in the first unit 10a. The chemical reaction of the target substance S is accelerated by stirring. When the chemical reaction of the target substance S ends, the rotation driving unit causes the present reactor 1 to perform the circumferential rotation. When the present reactor 1 performs the circumferential rotation, the target substance S in the first unit 10a is transferred into the second unit 10b.

Then, a new raw material for promoting the chemical reaction of the target substance S is supplied to the second unit 10b. The new raw material is supplied to the second unit 10b through a supply hole (not illustrated) or the like provided on the outer peripheral wall 11 or the partition wall 12. The rotation driving unit causes the present reactor 1 to perform the oscillating rotation. The target substance S is stirred in the second unit 10b. The chemical reaction of the target substance S is accelerated by stirring. When the chemical reaction of the target substance S ends, the rotation driving unit causes the present reactor 1 to perform the circumferential rotation. When the present reactor 1 performs the circumferential rotation, the target substance S in the second unit 10b is transferred into the third unit 10c.

Then, a new raw material for promoting the chemical reaction of the target substance S is supplied to the third unit 10c. The new raw material is supplied to the third unit 10c from a supply hole (not illustrated) or the like provided on the outer peripheral wall 11 or the partition wall 1. The rotation driving unit causes the present reactor 1 to perform the oscillating rotation. The target substance S is stirred in the third unit 10c. The chemical reaction of the target substance S is accelerated by stirring.

When the chemical reaction of the target substance S ends, a product is produced. The rotation driving unit causes the present reactor 1 to perform the circumferential rotation. When the present reactor 1 performs the circumferential rotation, the product in the third unit 10c is taken out of the present reactor 1. The product is discharged to the outside of the third unit 10c through the discharge port 161 of the third unit 10c.

### Conclusion (1)

According to the embodiment described above, the present reactor 1 includes the unit 10 on the upstream side, the unit 10 on the downstream side, and the rotation driving unit that causes the units 10 to rotate about the rotary shaft C. The target substance S is stirred in the unit 10 on the upstream side and then transferred to the unit 10 on the downstream side. The rotation driving unit causes the unit 10 on the upstream side to perform the oscillating rotation about the rotary shaft C in such a way that the target substance S is stirred in the unit 10 on the upstream side. The rotation driving unit causes the unit 10 on the upstream side to perform the circumferential rotation about the rotary shaft C in such a way that the target substance S is transferred from the unit 10 on the upstream side to the unit 10 on the downstream side. That is, the present reactor 1 does not require a stirring wing and the like. The present reactor 1 does not require piping unlike conventional systems. The present reactor 1 is capable of achieving an accurate chemical reaction in each unit 10.

According to the embodiment described above, the present reactor 1 includes the partition wall 12 that serves as a partition between the inside of the unit 10 on the upstream side and the inside of the unit 10 on the downstream side. The partition wall 12 has the communication hole 16 that allows the inside of the unit 10 on the upstream side to communicate with the inside of the unit 10 on the downstream side. The target substance S is transferred from the unit 10 on the upstream side to the unit 10 on the downstream side via the communication hole 16. That is, the present reactor 1 is capable of achieving an accurate chemical reaction in each unit 10. The present reactor 1 is capable of transferring the target substance S from the unit 10 on the upstream side to the unit 10 on the downstream side.

According to the embodiment described above, the communication hole 16 of the present reactor 1 is disposed in the outer edge portion 121 of the partition wall 12. That is, the present reactor 1 is capable of transferring the target substance S from the unit 10 on the upstream side to the unit 10 on the downstream side at a predetermined timing.

According to the embodiment described above, the unit 10 on the upstream side of the present reactor 1 includes the outer peripheral wall 11 having a tubular shape, and the transfer wall 15 disposed in a space surrounded by the outer peripheral wall 11. The transfer wall 15 guides, to the communication hole 16, the target substance S stirred in the unit 10 on the upstream side. That is, the present reactor 1 is capable of efficiently transferring the target substance S to the unit 10 on the downstream side.

According to the embodiment described above, the transfer wall 15 of the present reactor 1 is disposed in such a way as to divide the inner peripheral surface of the outer peripheral wall 11. When the unit 10 on the upstream side performs the circumferential rotation, the movement of the target substance S stirred inside the unit 10 on the upstream side is restricted by the transfer wall 15. That is, the present reactor 1 is capable of preventing the mixture of the target substance S in the unit 10 on the upstream side and the target substance S in the unit 10 on the downstream side.

According to the embodiment described above, the transfer wall 15 of the present reactor 1 is disposed to be inclined with respect to the inner peripheral surface of the outer peripheral wall 11. The transfer wall 15 includes the inner peripheral abutment side 151 that abuts the inner peripheral surface of the outer peripheral wall 11. The inner peripheral abutment side 151 includes the upstream end 15a disposed at one of the openings of the outer peripheral wall 11, and the downstream end 15b disposed at the other opening of the outer peripheral wall 11. That is, the present reactor 1 is capable of dividing the inside of the unit 10 by the transfer wall 15.

According to the embodiment described above, the communication hole 16 of the present reactor 1 is disposed in the vicinity of the downstream end 15b. That is, the present reactor 1 is capable of having the communication hole 16 disposed at a position where the outer peripheral wall 11 and the transfer wall 15 intersect.

According to the embodiment described above, the transfer wall 15 of the present reactor 1 includes the partition abutment side 152 that abuts the partition wall 12. The communication hole 16 is disposed in the vicinity of the partition abutment side 152. That is, the present reactor 1 is capable of facilitating the transfer of the target substance S captured by the transfer wall 15 to the communication hole 16.

According to the embodiment described above, the direction in which the partition abutment side 152 of the present reactor 1 is disposed is orthogonal to the axial direction of the rotary shaft C. That is, the present reactor 1 enables capture of the target substance S by the transfer wall 15 in accordance with the circumferential rotation.

### Embodiment (2) of Present Reactor

Another embodiment (2) of the present reactor 1 will be described below with a focus on differences from the embodiment (1) of the present reactor 1 described above.

The embodiment (2) is different from the embodiment (1) in that a pipe body 50 for supplying a reactant to be used for a reaction of a target substance S is disposed in a shaft hole 17.

### Configuration of Present Reactor (2)

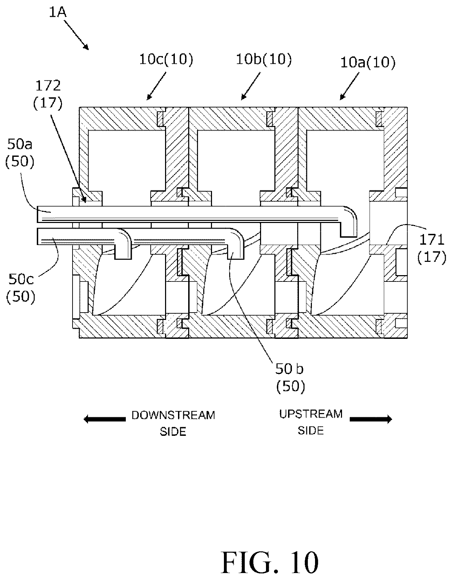

Fig. 10 is a longitudinal sectional view of the present reactor 1 illustrating another embodiment of the present reactor 1.

The present reactor 1A includes the first unit 10a, the second unit 10b, and the third unit 10c. The unit 10 (the first unit 10a, the second unit 10b, and the third unit 10c) includes the outer peripheral wall 11, the partition wall 12, the transfer wall 15, the communication hole 16, and the shaft hole 17.

The pipe body 50 supplies a reactant into the unit 10. The pipe body 50 is, for example, a pipe, a tube, or the like. The pipe body 50 is disposed through the shaft hole 17. That is, the pipe body 50 is disposed along a rotary shaft C. The pipe body 50 is inserted from a downstream-side shaft hole 172, and a tip of the pipe body 50 is disposed in the unit 10. That is, the pipe body 50 includes respective pipe bodies 50a, 50b, and 50c corresponding to the first unit 10a, the second unit 10b, and the third unit 10c, respectively. The pipe body 50 is an example of the supply line in the present invention.

The "reactant" is a substance supplied into the unit 10 from the pipe body 50. The reactant is selected according to the chemical reaction corresponding to the production stage of the target substance S, and may be a catalyst, a raw material, distilled water, or the like. The reactant is mainly a liquid, but may be a solid or a gas.

### Operation of Present Reactor (2)

The operation of the present reactor will be described below.

First, the target substance S is introduced into the first unit 10a on the upstream side. The target substance S is introduced to the inside through the inlet port 162 of the first unit 10a. A reactant is supplied into the first unit 10a via the pipe body 50a.

Then, the rotation driving unit causes the present reactor 1 to perform the oscillating rotation. The target substance S is stirred in the first unit 10a. The chemical reaction of the target substance S is accelerated by stirring. When the chemical reaction of the target substance S ends, the rotation driving unit causes the present reactor 1 to perform the circumferential rotation. When the present reactor 1 performs the circumferential rotation, the target substance S in the first unit 10a is transferred into the second unit 10b.

Then, a new raw material or a new reactant for promoting the chemical reaction of the target substance S is supplied into the second unit 10b via the pipe body 50b. The rotation driving unit causes the present reactor 1 to perform the oscillating rotation. The target substance S is stirred in the second unit 10b. The chemical reaction of the target substance S is accelerated by stirring. When the chemical reaction of the target substance S ends, the rotation driving unit causes the present reactor 1 to perform the circumferential rotation. When the present reactor 1 performs the circumferential rotation, the target substance S in the second unit 10b is transferred into the third unit 10c.

Then, a new raw material or a new reactant for promoting the chemical reaction of the target substance S is supplied into the third unit 10c via the pipe body 50c. The rotation driving unit causes the present reactor 1 to perform the oscillating rotation. The target substance S is stirred in the third unit 10c. The chemical reaction of the target substance S is accelerated by stirring.

When the chemical reaction of the target substance S ends, a product is produced. The rotation driving unit causes the present reactor 1 to perform the circumferential rotation. When the present reactor 1 perform the circumferential rotation, the product in the third unit 10c is taken out of the present reactor 1. The product is discharged to the outside of the third unit 10c through the discharge port 161 of the third unit 10c.

Note that the pipe body may be disposed in a shaft member (not illustrated) having a hollow portion. The shaft member having the hollow portion rotatably supports the present reactor about the rotary shaft. The pipe body is disposed inside the shaft member, thereby being unaffected by the oscillating rotation and circumferential rotation of the present reactor. As a result, the present reactor enables stable supply of reactants and the like.

### Conclusion (2)

According to the embodiment described above, the present reactor 1A includes the supply line that supplies a reactant to be used for the reaction of the target substance S. The supply line is disposed along the rotary shaft C. That is, the supply line does not hinder the oscillating rotation and the circumferential rotation of the present reactor 1. Thus, the present reactor 1A can supply a reactant into the unit 10 without hindering a rotational motion of the present reactor 1A.

According to the embodiment described above, the present reactor 1A includes the shaft member that supports the unit 10 on the upstream side and the unit 10 on the downstream side rotatably about the rotary shaft C. The shaft member includes a hollow portion. The supply line is disposed in the hollow portion. That is, the supply line of the present reactor 1A is not affected by adhesion and the like of the target substance S by the oscillating rotation and the circumferential rotation of the unit 10.

According to the embodiment described above, the partition wall 12 of the present reactor 1 has the shaft hole 17 through which the supply line is disposed. That is, the present reactor 1A is capable of supplying the reactant through the shaft hole 17.

### Other Embodiment

Note that, in the present invention, the number of the connected units is not limited to three. The number of the connected units is determined according to the production stage of the target substance. In the present reactor, for example, four or more units may be connected.

In the present invention, the use of the unit is not limited to chemical reactions. The unit may also be used for purposes such as heating, cooling, drying, crystallization, filtration, or culture. The present reactor operates by combining a pause, the oscillating rotation, and the circumferential rotation according to each use and the like.

In the present invention, the outer peripheral wall need not have a cylindrical shape. The outer peripheral wall may have a polygonal shape. When the outer peripheral wall has a polygonal shape, the partition wall has a polygonal shape accordingly. The outer peripheral wall has a polygonal shape, and thus stirring intensity by the oscillating rotation increases.

In the present invention, the inner peripheral surface of the outer peripheral wall may include a protrusion, a plate, or the like. The protrusion, the plate, or the like is disposed on the inner peripheral surface, and thus stirring intensity by the oscillating rotation increases.

In the present invention, the shape of the transfer wall is not limited to the shape in which a rectangular plate is disposed in a spiral shape. The shape of the transfer wall may be a shape configured to capture the target substance and guide the target substance to the communication hole.

In the present invention, the shape of the communication hole is not limited to a fan shape. The shape of the communication hole may be a shape that allows the inside of the upstream-side unit to communicate with the inside of the downstream-side unit.

In the present invention, the disposed position of the communication hole is not limited to the outer edge portion of the partition wall. The communication hole may be disposed at a position that allows the target substance to be transferred from the inside of the upstream-side unit to the inside of the downstream-side unit.

In the present invention, the method for introducing a raw material into the unit is not limited to the method for introducing a raw material through the inlet port of the unit or the upstream-side shaft hole. The introducing method may be, for example, a method for introducing a raw material into the unit via the supply line formed in the outer peripheral wall of the unit or the upstream-side partition wall.

In the present invention, the method for taking out a product is not limited to the method for discharging a product to the outside through the discharge port. The method for taking out the product may be, for example, suction with a pump or the like through a suction pipe inserted into the inside of the unit.

In the present invention, the pipe body is not limited to insertion through the downstream-side shaft hole. For example, the pipe body may be disposed through the upstream-side shaft hole.

In the present invention, the rotation driving unit is not limited to the configuration in which the rotation driving unit is assembled to the shaft member. The rotation driving unit may be configured to rotate and drive the present reactor about the rotary shaft. For example, the driving device of the rotation driving unit may be configured to rotate and drive the present reactor by rotating a rotation roller disposed below the present reactor.

In the present invention, the present reactor is not limited to being installed with the rotary shaft of the present reactor in the horizontal orientation. For example, the present reactor may be installed with the rotary shaft inclined. The angle at which the rotary shaft is disposed may be selected depending on a raw material to be introduced. In the present reactor, the transfer efficiency from the upstream-side unit to the downstream-side unit can be changed by inclining the rotary shaft.

### Features of Present Reactor

The features of the present reactor described above will be summarized below.

The present reactor includes an upstream-side unit (e.g., the first unit 10a), a downstream-side unit (e.g., the second unit 10b) connected to the upstream-side unit, and a rotation driving unit configured to rotate the upstream-side unit and the downstream-side unit about a common rotary shaft (e.g., the rotary shaft C), in which a target substance (e.g., the target substance S) to be subjected to a reaction supplied to the upstream-side unit is stirred in the upstream-side unit and subsequently transferred to the downstream-side unit, and the rotation driving unit causes the upstream-side unit to perform oscillating rotation about the rotary shaft in such a way that the target substance is stirred in the upstream-side unit, and causes the upstream-side unit to perform circumferential rotation about the rotary shaft in such a way that the target substance is transferred from the upstream-side unit to the downstream-side unit.

The present reactor further includes a partition wall (e.g., the partition wall 12) configured to serve as a partition between an inside of the upstream-side unit and an inside of the downstream-side unit, in which the partition wall may have a communication hole (e.g., the communication hole 16) that allows the inside of the upstream-side unit to communicate with the inside of the downstream-side unit, and the target substance may be transferred from the upstream-side unit to the downstream-side unit via the communication hole.

In the present reactor, the rotary shaft may be disposed at a central portion of the partition wall, and the communication hole may be disposed in an outer edge portion (e.g., the outer edge portion 121) of the partition wall.

In the present reactor, the upstream-side unit may include an outer peripheral wall (e.g., the outer peripheral wall 11) having a tubular shape, and a transfer wall (e.g., the transfer wall 15) disposed in a space surrounded by the outer peripheral wall, and the transfer wall may guide the target substance stirred in the upstream-side unit to the communication hole.

In the present reactor, the transfer wall may be disposed in such a way as to divide an inner peripheral surface of the outer peripheral wall, and, when the upstream-side unit performs the circumferential rotation, transferring, within the upstream-side unit, of the target substance stirred inside the upstream-side unit may be regulated by the transfer wall.

In the present reactor, the transfer wall may be disposed to be inclined to the inner peripheral surface.

In the present reactor, the transfer wall may include an inner peripheral abutment side (e.g., the inner peripheral abutment side 151) configured to abut the inner peripheral surface of the outer peripheral wall, and the inner peripheral abutment side may include an upstream end (e.g., the upstream end 15a) disposed in one of openings of the outer peripheral wall, and a downstream end (e.g., the downstream end 15b) disposed in the other opening of the outer peripheral wall.

In the present reactor, the communication hole may be disposed in the vicinity of the downstream end.

In the present reactor, the transfer wall may include a partition abutment side (e.g., the partition abutment side 152) configured to abut the partition wall, and the communication hole may be disposed in the vicinity of the partition abutment side.

In the present reactor, a direction in which the partition abutment side is disposed may be orthogonal to an axial direction of the rotary shaft.

The present reactor further includes a supply line (e.g., the pipe body 50) configured to supply a reactant to be used for a reaction of the target substance, in which the supply line may be disposed along the rotary shaft.

The present reactor further includes a shaft member configured to support the upstream-side unit and the downstream-side unit rotatably about the rotary shaft, in which the shaft member may include a hollow portion, and the supply line may be disposed in the hollow portion.

In the present reactor, the partition wall may have a shaft hole (e.g., the shaft hole 17) through which the supply line is inserted.

### [Reference signs List]

- 1: Continuous reactor
- 10: Unit
- 10a: First unit (upstream-side unit)
- 10b: Second unit (downstream-side unit)
- 10c: Third unit
- 11: Outer peripheral wall
- 12: Partition wall
- 121: Outer edge portion
- 13: Upstream-side partition wall
- 14: Downstream-side partition wall
- 15: Transfer wall
- 151: Inner peripheral abutment side
- 15a: Upstream end
- 15b: Downstream end
- 152: Partition abutment side
- 16: Communication hole
- 161: Discharge port
- 162: Inlet port
- 17: Shaft hole
- 171: Upstream-side shaft hole
- 172: Downstream-side shaft hole
- 50: Pipe body (supply line)
- 50a: First pipe body
- 50b: Second pipe body
- 50c: Third pipe body
- S: Target substance
- C: Rotary shaft

## Claims

1. A continuous reactor comprising:
an upstream-side unit;
a downstream-side unit connected to the upstream-side unit; and
a rotation driving unit configured to rotate the upstream-side unit and the downstream-side unit about a common rotary shaft, wherein
a target substance to be subjected to a reaction supplied to the upstream-side unit is stirred in the upstream-side unit and subsequently transferred to the downstream-side unit, and
the rotation driving unit
causes the upstream-side unit to perform oscillating rotation about the rotary shaft in such a way that the target substance is stirred in the upstream-side unit, and
causes the upstream-side unit to perform circumferential rotation about the rotary shaft in such a way that the target substance is transferred from the upstream-side unit to the downstream-side unit.

2. The continuous reactor according to claim 1, further comprising
a partition wall configured to serve as a partition between an inside of the upstream-side unit and an inside of the downstream-side unit, wherein
the partition wall has a communication hole that allows the inside of the upstream-side unit to communicate with the inside of the downstream-side unit, and
the target substance is transferred from the upstream-side unit to the downstream-side unit via the communication hole.

3. The continuous reactor according to claim 2, wherein
the rotary shaft is disposed at a central portion of the partition wall, and
the communication hole is disposed in an outer edge portion of the partition wall.

4. The continuous reactor according to claim 3, wherein
the upstream-side unit includes
an outer peripheral wall having a tubular shape, and
a transfer wall disposed in a space surrounded by the outer peripheral wall, and
the transfer wall guides the target substance stirred in the upstream-side unit to the communication hole.

5. The continuous reactor according to claim 4, wherein
the transfer wall is disposed in such a way as to divide an inner peripheral surface of the outer peripheral wall, and,
when the upstream-side unit performs the circumferential rotation, transferring, within the upstream-side unit, of the target substance stirred in the upstream-side unit is regulated by the transfer wall.

6. The continuous reactor according to claim 5, wherein the transfer wall is disposed to be inclined to the inner peripheral surface.

7. The continuous reactor according to claim 6, wherein
the transfer wall includes an inner peripheral abutment side configured to abut the inner peripheral surface of the outer peripheral wall, and
the inner peripheral abutment side includes
an upstream end disposed in one of openings of the outer peripheral wall, and
a downstream end disposed in the other opening of the outer peripheral wall.

8. The continuous reactor according to claim 7, wherein the communication hole is disposed in the vicinity of the downstream end.

9. The continuous reactor according to claim 7, wherein
the transfer wall includes a partition abutment side configured to abut the partition wall, and
the communication hole is disposed in the vicinity of the partition abutment side.

10. The continuous reactor according to claim 9, wherein a direction in which the partition abutment side is disposed is orthogonal to an axial direction of the rotary shaft.

11. The continuous reactor according to claim 3, further comprising
a supply line configured to supply a reactant to be used for a reaction of the target substance, wherein
the supply line is disposed along the rotary shaft.

12. The continuous reactor according to claim 11, further comprising
a shaft member configured to support the upstream-side unit and the downstream-side unit rotatably about the rotary shaft, wherein
the shaft member includes a hollow portion, and
the supply line is disposed in the hollow portion.

13. The continuous reactor according to claim 11, wherein the partition wall has a shaft hole through which the supply line is inserted.
